# EUROPEAN PATENT APPLICATION

(11) **EP 4 836 320 A1**
(43) Date of publication of application: **04.11.2026**
(21) Application number: 26164213.6
(22) Date of filing: 12.03.2026
(51) Int. Cl.: H04B 10/112

(54) **OPTICAL BEAM SOURCE ACQUISITION DEVICE AND OPTICAL BEAM TRANSCEIVER**

(30) Priority: 30.04.2025 JP 2025075238
(71) Applicant: Tamron Co., Ltd., Saitama-shi, Saitama 330-8556 (JP)
(72) Inventor: FUSE, Shingo, Saitama, 337-8556 (JP); IZU, Toshiaki, Saitama, 337-8556 (JP)
(74) Representative: MFG Patentanwälte Meyer-Wildhagen Meggle-Freund Gerhard PartG mbB

(57) **Abstract**

Based on an image of an acquisition target captured by an image forming optical system (31) on an acquisition target side of an optical axis adjustment optical element (23), an attitude of the entire device is controlled, and based on a position of an optical axis of received light detected by a light-receiving position detection element (22) between the optical axis adjustment optical element (23) and a communication-light receiving unit (26), an optical axis of the received light is adjusted by the optical axis adjustment optical element (23), thereby achieving optical axis alignment of an optical beam from the acquisition target.

## Description

### CROSS-REFERENCE TO RELATED APPLICATIONS

This application is based on and claims the benefit of priority from Japanese Patent Application No. 2025-075238, filed on April 30, 2025, the entire contents of which are incorporated herein by reference.

### BACKGROUND OF THE INVENTION

### Technical Field

The present invention relates to an optical beam source acquisition device and an optical beam transceiver.

### Related Art

In optical wireless communication and optical wireless power transfer, it is required to precisely and rapidly align the optical axes of transmitted and received optical beams. As a technique for aligning the optical axes of such transmitted and received optical beams, a technique is known in which a laser beam source is acquired and tracked using a captured image (for example, refer to JP 2021-166392 A).

In the techniques in the related art in which acquisition and tracking use captured images as described above, there are issues in both the accuracy of optical axis alignment and the speed of optical axis alignment. That is, regarding the accuracy of optical axis alignment, the captured image of an acquisition target located at a long distance becomes small, and thus the detection accuracy decreases. On the other hand, in a case where a magnifying optical system is provided in order to enlarge the captured image, a field of view becomes narrow, which makes it easier for an acquisition target moving at a high speed to deviate from an imaging range.

In optical wireless communication and optical wireless power transfer, it is generally necessary to align, through acquisition and tracking, the optical axis of laser light emitted from a communication port of the own device with the optical axis of laser light arriving from an acquisition target. In this case, in techniques in the related art, even when the captured image of the acquisition target is positioned at the center of the image, the optical axis of the laser light emitted from the own device does not necessarily coincide with the optical axis of the laser light arriving from the acquisition target. This is because optical axis alignment is performed indirectly using the captured image. Therefore, in the techniques in the related art, the accuracy of optical axis alignment is reduced.

In addition, regarding the speed of optical axis alignment, detection of an acquisition target based on captured images may require complex image processing because the image sensor has a large number of pixels. As a result, the speed of optical axis alignment becomes slow, and it tends to be difficult to track an acquisition target moving at a high speed.

According to an aspect of the present invention, it is possible to realize optical axis alignment of an optical beam from an acquisition target at a high speed and with high accuracy in optical wireless communication and optical wireless power transfer.

### SUMMARY OF THE INVENTION

In order to solve the above problems, an optical beam source acquisition device according to an aspect of the present invention is an optical beam source acquisition device that acquires an optical beam source that generates an optical beam, the optical beam source acquisition device including an optical axis adjustment optical element that adjusts an optical axis of a passing optical beam; a light-receiving unit that receives an optical beam having passed through the optical axis adjustment optical element; an optical axis position detection optical system that detects a position of an optical axis of the optical beam on a light-receiving unit side of the optical axis adjustment optical element; an imaging optical system that captures an image of the optical beam source on an optical beam source side of the optical axis adjustment optical element; a first control unit that outputs a signal for controlling an attitude of the optical beam source acquisition device based on the image captured by the imaging optical system; and a second control unit that outputs, to the optical axis adjustment optical element, a signal for controlling adjustment of an optical axis by the optical axis adjustment optical element based on the position of the optical axis detected by the optical axis position detection optical system.

In order to solve the above problems, an optical beam transceiver according to another aspect of the present invention includes the optical beam source acquisition device described above; and an optical beam generation device that generates an optical beam passing through the optical axis adjustment optical element, on the light-receiving unit side of the optical axis adjustment optical element.

According to an aspect of the present invention, it is possible to realize optical axis alignment of an optical beam from an acquisition target at a high speed and with high accuracy in optical wireless communication and optical wireless power transfer.

### BRIEF DESCRIPTION OF THE DRAWINGS

FIG. 1 is a diagram illustrating an example of a system using an optical wireless communication device according to an embodiment of the present invention;
FIG. 2 illustrates a first example of a schematic configuration of the optical wireless communication device according to an embodiment of the present invention;
FIG. 3 illustrates a second example of a schematic configuration of the optical wireless communication device according to an embodiment of the present invention;
FIG. 4 is a diagram schematically illustrating an optical configuration of an optical beam transceiver according to a first embodiment of the present invention;
FIG. 5 is a flowchart illustrating a flow of processing of an example of acquisition and tracking control performed by the optical beam transceiver according to the first embodiment of the present invention;
FIG. 6 is a diagram schematically illustrating an example of an image captured by an image sensor according to the first embodiment of the present invention;
FIG. 7 is a diagram schematically illustrating an example of a detection state of laser light by a light-receiving position detection element according to the first embodiment of the present invention;
FIG. 8 is a diagram schematically illustrating an optical configuration of an optical beam transceiver according to a second embodiment of the present invention;
FIG. 9 is a flowchart illustrating a flow of processing of an example of acquisition and tracking control performed by the optical beam transceiver according to the second embodiment of the present invention;
FIG. 10 is a diagram schematically illustrating an example of an image captured by a communication-light image sensor according to the second embodiment of the present invention;
FIG. 11 is a diagram schematically illustrating an optical configuration of an optical beam transceiver according to a third embodiment of the present invention;
FIG. 12 is a flowchart illustrating a flow of processing of an example of acquisition and tracking control performed by the optical beam transceiver according to the third embodiment of the present invention;
FIG. 13 is a diagram schematically illustrating an example of an image captured by a second image sensor according to the third embodiment of the present invention; and
FIG. 14 is a diagram schematically illustrating an optical configuration of an optical beam transceiver according to a fourth embodiment of the present invention.

### DESCRIPTION OF THE EMBODIMENTS

### [First Embodiment]

Although embodiments of the present invention are applicable to both optical wireless communication and optical wireless power transfer, the embodiments of the present invention will be described below by taking optical wireless communication using laser light as an example.

### [Configuration]

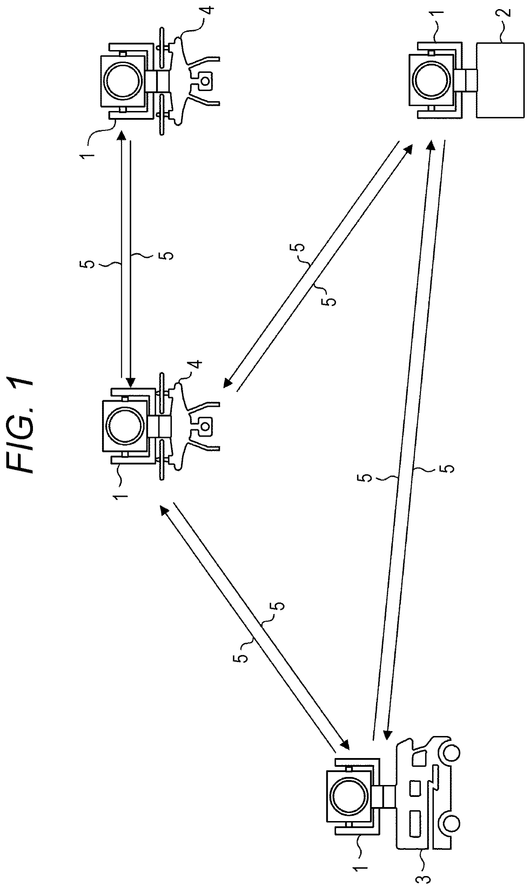

FIG. 1 illustrates an example of a system using an optical wireless communication device. As illustrated in FIG. 1, an optical wireless communication mechanism 1 can be mounted on a ground station 2, a ground mobile object 3 such as an automobile, or an aerial mobile object 4 such as a drone. Between the optical wireless communication mechanisms 1, laser light 5 is transmitted and received as signal light. By mounting the optical wireless communication mechanism 1 on these, optical wireless communication can be performed between a ground station and a ground mobile object, between a ground station and an aerial mobile object, between a ground mobile object and an aerial mobile object, and between aerial mobile objects. In addition, optical wireless communication can be similarly performed between ground stations and between ground mobile objects.

Hereinafter, embodiments of the present invention will be described by taking, as an example, transmission and reception of optical beams between aerial mobile objects such as drones. The optical beams to be transmitted and received are infrared laser light (a wavelength of 780 to 1700 nm).

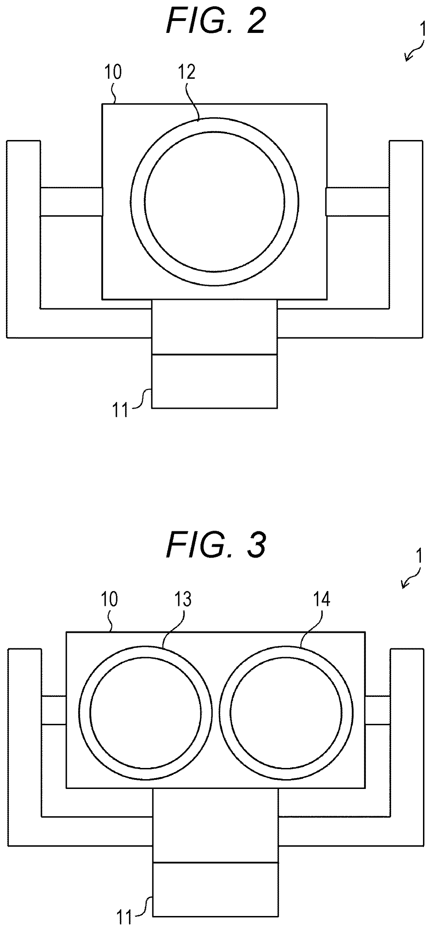

FIGS. 2 and 3 illustrate examples of a schematic configuration of the optical wireless communication mechanism 1. The optical wireless communication mechanism 1 includes an optical beam transceiver 10 and a gimbal 11 that supports the optical beam transceiver 10. The gimbal 11 may be configured to be capable of two-axis pan-tilt motion, or may be configured to be capable of three-axis motion obtained by adding a rotation motion to the pan-tilt motion. The optical beam transceiver 10 may include an optical wireless communication port 12 configured to emit and receive laser light as illustrated in FIG. 2, or may separately include an emission port 13 for emitting laser light and a light-receiving port 14 for receiving laser light as illustrated in FIG. 3. In the latter case, the emission port 13 and the light-receiving port 14 are arranged such that their respective optical axes are parallel to each other.

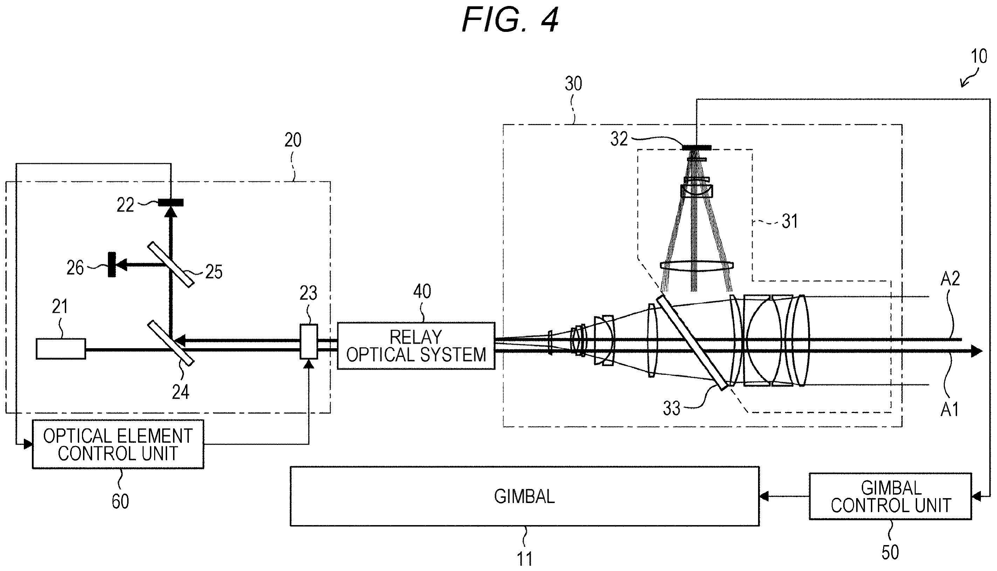

An example of an optical system of the optical beam transceiver 10 is schematically illustrated in FIG. 4. The optical beam transceiver 10 includes a laser light transmitting and receiving unit 20, an imaging unit 30, a relay optical system 40, a gimbal control unit 50, and an optical element control unit 60. The optical beam transceiver 10 is supported by the gimbal 11. The relay optical system 40 optically connects the laser light transmitting and receiving unit 20 and the imaging unit 30.

The laser light transmitting and receiving unit 20 includes a laser light source 21, a light-receiving position detection element 22, an optical axis adjustment optical element 23, half mirrors 24 and 25, and a communication-light receiving unit 26. Each of the light-receiving position detection element 22 and the communication-light receiving unit 26 is configured to be capable of detecting laser light having a specific wavelength (for example, laser light in a near-infrared wavelength range).

The laser light source 21 is a device that outputs laser light for signal light or for power transfer.

The light-receiving position detection element 22 is an element that detects a position of received light (infrared laser light) in a cross section of an optical path of the received light. For example, the light-receiving position detection element 22 may be a quadrant photodetector (QPD), which is capable of converting a light detection signal into an electrical signal, and more specifically, may be an infrared CCD sensor in which four symmetric regions are defined on a light-receiving surface.

The optical axis adjustment optical element 23 is disposed on an optical path of laser light and is an optical element that adjusts an emission angle of the laser light passing therethrough to a predetermined emission angle with high precision and at a high speed. The optical axis adjustment optical element 23 may be, for example, two pairs of (four) wedge prisms. Each of the wedge prisms is configured to be rotatably driven by a voice coil motor.

The optical axis adjustment optical element 23 includes, for example, a first wedge prism pair including a first wedge prism and a second wedge prism, a first voice coil motor configured to rotationally drive each of the first wedge prism and the second wedge prism, a second wedge prism pair including a third wedge prism and a fourth wedge prism, and a second voice coil motor configured to rotationally drive each of the third wedge prism and the fourth wedge prism.

Each wedge prism is disposed in a movable frame, and the movable frame is rotatably supported on a fixed frame. The fixed frame is an annular member in plan view and has a circular opening at a center thereof. A plurality of coils are arranged on a surface of the fixed frame in a circumferential direction of the fixed frame, and all of the coils are connected in series to a power supply. In addition, Hall elements are arranged between the coils in the circumferential direction of the fixed frame. The movable frame is an annular member in plan view and has a circular opening at a center thereof, and a wedge prism is fitted into the opening.

Magnets are disposed on a surface of the movable frame at positions corresponding to the coils of the fixed frame and at positions corresponding to the Hall elements.

Each of the wedge prisms in the first wedge prism pair rotates in a direction opposite to each other to deflect signal light in a specific one direction (for example, a pitch direction (vertical direction)), and each of the wedge prisms in the second wedge prism pair rotates in a direction opposite to each other to deflect signal light in another specific direction (for example, a yaw direction (horizontal direction)). In this manner, the optical axis adjustment optical element 23 is configured to be capable of rapidly and precisely deflecting received light to an arbitrary position on a plane orthogonal to a central axis of the wedge prisms.

The half mirror 24 is disposed between the laser light source 21 and the optical axis adjustment optical element 23 on an optical path of the laser light. The half mirror 24 transmits transmitted light from the laser light source 21 and reflects received light from an acquisition and tracking target toward the light-receiving position detection element 22 at an angle of 90°.

The half mirror 25 is disposed between the half mirror 24 and the light-receiving position detection element 22 on the optical path of the laser light. The half mirror 25 reflects a part of the received light from the half mirror 24 toward the communication-light receiving unit 26 at an angle of 90°, and transmits the remaining part. The transmitted received light is directed toward the light-receiving position detection element 22.

The communication-light receiving unit 26 is an element that finally receives the received light. The communication-light receiving unit 26 is, for example, a photoelectric conversion element.

In the laser light transmitting and receiving unit 20, a detection signal from the light-receiving position detection element 22 is input to the optical element control unit 60, and an output signal from the optical element control unit 60 is input to the optical axis adjustment optical element 23.

The imaging unit 30 includes an image forming optical system 31, an image sensor 32, and optical path branching means 33.

The image forming optical system 31 is disposed on an optical path from an optical path of the received light to the image sensor 32, and is an optical system that condenses light (including received light) from the acquisition and tracking target toward the image sensor 32 or the relay optical system 40. The image forming optical system 31 may include various lenses.

The image sensor 32 is an element that converts a detection signal of light into an electrical signal to capture an image of the acquisition and tracking target, and may be, for example, a CCD sensor or a CMOS sensor.

The optical path branching means 33 is an element that is disposed on the optical path of the received light in the optical system of the imaging unit 30, reflects a part of the light from the acquisition and tracking target toward the image sensor 32, and transmits the remaining part. The optical path branching means 33 may be, for example, a half mirror or a beam splitter.

In the imaging unit 30, a detection signal from the image sensor 32 is input to the gimbal control unit 50. An output signal from the gimbal control unit 50 is input to the gimbal 11.

An arrow A1 represents an optical path of laser light emitted from the laser light source 21, and an arrow A2 represents an optical path of laser light arriving from an optical beam source of the acquisition and tracking target. The laser light emitted from the laser light source 21 passes through the optical system in the laser light transmitting and receiving unit 20, the relay optical system 40, and the optical system in the imaging unit 30, and is emitted to the outside toward the acquisition and tracking target. On the other hand, the laser light arriving from the acquisition and tracking target passes through the optical system in the imaging unit 30, the relay optical system 40, and the optical system in the laser light transmitting and receiving unit 20, and is directed toward the light-receiving position detection element 22.

### [Specific Mode of Acquisition and Tracking Control]

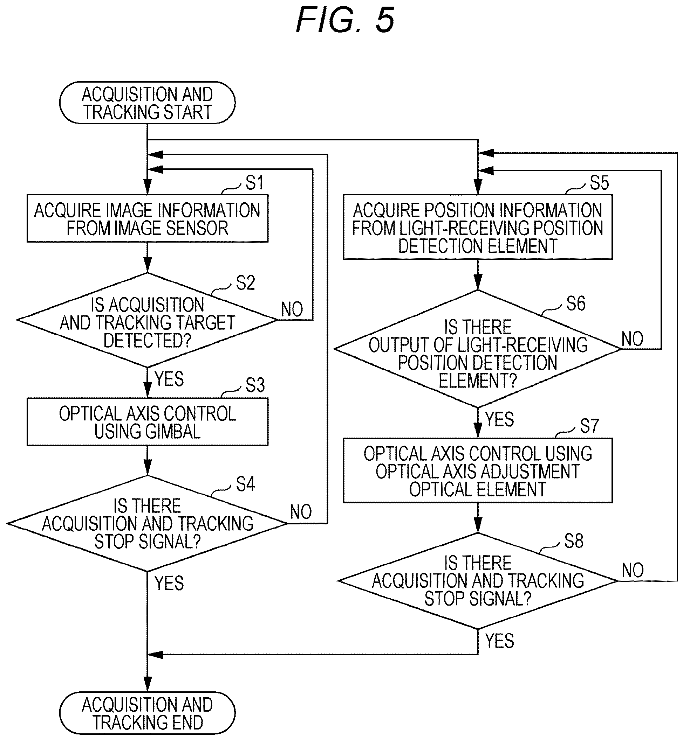

An example of a control method for acquiring and tracking an acquisition and tracking target by the optical beam transceiver 10 will be described. FIG. 5 is a flowchart illustrating a flow of processing of an example of the acquisition and tracking control performed by the optical beam transceiver 10. In FIG. 5, steps S1 to S4 are processing for adjusting an optical axis by gimbal control based on images acquired from the image sensor 32, and the processing is performed, for example, by the gimbal control unit 50. In addition, steps S5 to S8 are processing for adjusting the optical axis by the optical axis adjustment optical element 23 based on an output of the light-receiving position detection element 22, and the processing is performed, for example, by the optical element control unit 60. In the present embodiment, after the start of the acquisition and tracking control, the acquisition and tracking control branches into the processing of step S1 and the processing of step S5, and the processing of steps S1 to S4 and the processing of steps S5 to S8 are performed in parallel.

Step S1 is a step of acquiring image information from the image sensor 32 in the imaging unit 30.

In step S1, the gimbal control unit 50 acquires image information of the acquisition and tracking target captured by the image forming optical system 31 and the image sensor 32.

Step S2 is a step of detecting the acquisition and tracking target based on the image information from the image sensor 32. In step S2, the gimbal control unit 50 detects the acquisition and tracking target on a pixel-by-pixel basis based on the image information from the image sensor 32, and specifies a position of the acquisition and tracking target. In a case where information of the acquisition and tracking target is not detected from the image information from the image sensor 32, the gimbal control unit 50 repeats the above processing from step S1.

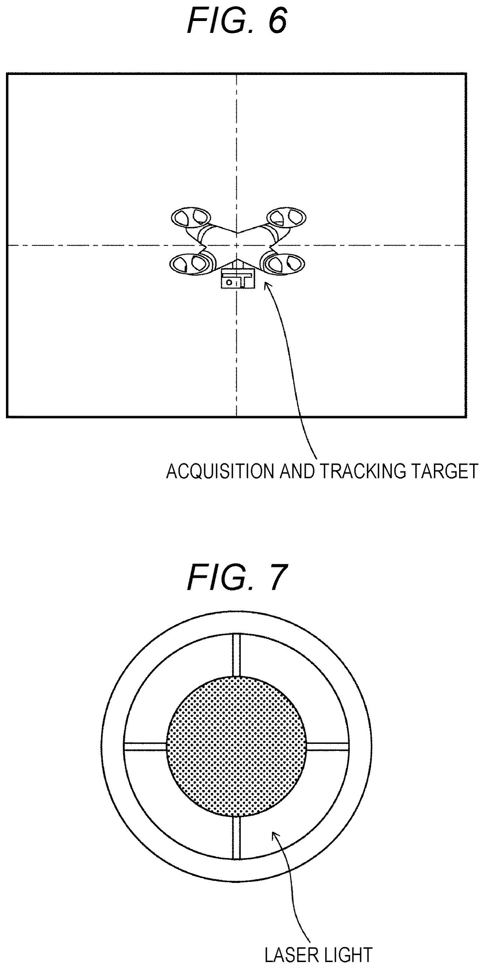

Step S3 is a step of adjusting an optical axis using the gimbal 11. In step S3, the gimbal control unit 50 acquires and outputs operation information of the gimbal 11 for bringing the acquisition and tracking target to a center of the image captured by the image sensor 32, and controls an operation of the gimbal 11. As a result, as illustrated in FIG. 6, an attitude of the optical beam transceiver 10 is controlled such that the acquisition and tracking target is positioned at the center of the image captured by the image sensor 32, and an optical axis misalignment amount between an optical axis of laser light emitted from the optical beam transceiver 10 and an optical axis of laser light arriving from the acquisition and tracking target is reduced.

Step S4 is a step of checking an acquisition and tracking stop signal. In step S4, the gimbal control unit 50 determines whether an acquisition and tracking stop signal has been input. The acquisition and tracking stop signal may be output, for example, by a user, or may be output from the optical element control unit 60 in accordance with an elapsed stop time after emission of the laser light from the laser light source 21 is stopped. In a case where the acquisition and tracking stop signal is detected, the gimbal control unit 50 terminates the acquisition and tracking processing. In a case where the acquisition and tracking stop signal is not detected, the gimbal control unit 50 repeats the above processing from step S1.

Step S5 is a step of acquiring an output of the light-receiving position detection element 22. In step S5, the optical element control unit 60 acquires position information of the received light in a cross section of an optical path of the received light, which is detected by the light-receiving position detection element 22.

Step S6 is a step of checking an output of the light-receiving position detection element. A case where the above-described position information from the light-receiving position detection element 22 is not detected indicates a state in which laser light arriving from the acquisition and tracking target is not incident on the light-receiving position detection element 22. Therefore, in step S6, the optical element control unit 60 returns to step S5 and performs acquisition of the position information. The optical element control unit 60 repeats the processing from step S5 to step S6 until laser light arriving from the acquisition and tracking target is incident on the light-receiving position detection element 22.

Step S7 is a step of adjusting an optical axis by using the optical axis adjustment optical element. In a case where laser light arriving from the acquisition and tracking target is incident on the light-receiving position detection element 22 and the above-described position information from the light-receiving position detection element 22 is detected in step S6, the optical element control unit 60 calculates an optical axis misalignment amount between an optical axis of laser light emitted from the optical beam transceiver 10 and an optical axis of laser light arriving from the acquisition and tracking target based on the signal of the position information from the light-receiving position detection element 22, acquires and outputs information on an operation amount of the optical axis adjustment optical element 23 for reducing the misalignment amount, and controls an operation of the optical axis adjustment optical element 23 in step S7. As a result, as illustrated in FIG. 7, the operation of the optical axis adjustment optical element 23 is controlled such that laser light arriving from the acquisition and tracking target is positioned substantially evenly in each of four symmetric regions on the light-receiving surface of the light-receiving position detection element 22, the above-described optical axis misalignment amount is further reduced, and so-called optical axis alignment by the optical axis adjustment optical element 23 is performed.

Step S8 is a step of checking an acquisition and tracking stop signal. In a case where the acquisition and tracking stop signal is detected, the optical element control unit 60 terminates the acquisition and tracking processing. In a case where the acquisition and tracking stop signal is not detected, the optical element control unit 60 repeats the above processing from step S5.

### [Operational Effects]

The optical beam transceiver 10 includes a configuration (optical beam source acquisition device) for acquiring an acquisition and tracking target as described above, and the laser light source 21 that generates an optical beam passing through the optical axis adjustment optical element 23 on the communication-light receiving unit 26 side of the optical axis adjustment optical element 23. Therefore, an attitude of the optical beam transceiver 10 is first controlled to be optically oriented toward the acquisition and tracking target based on the image of the acquisition and tracking target, and then an optical axis of received light is more precisely adjusted based on the position of the optical axis of the received light. Therefore, in optical wireless communication performed by the optical beam transceiver 10, it is possible to achieve optical axis alignment of an optical beam from the acquisition and tracking target at higher speed and with higher accuracy than in an optical beam transceiver in the related art which performs optical axis alignment of communication light based only on an image of the acquisition and tracking target.

As described above, the optical beam transceiver 10 detects the acquisition and tracking target by using both the image sensor 32 and the light-receiving position detection element 22.

The image sensor 32 is disposed in the imaging unit 30. The imaging unit 30 has a function of forming an image including the acquisition and tracking target on the image sensor 32 by the image forming optical system 31 and acquiring the image by the image sensor 32.

The light-receiving position detection element 22 is disposed in the laser light transmitting and receiving unit 20. The laser light transmitting and receiving unit 20 has a function of emitting laser light for optical wireless communication or optical wireless power transfer toward the acquisition and tracking target, and a function of receiving laser light arriving from the acquisition and tracking target. The laser light arriving from the acquisition and tracking target is laser light that coincides with a light-receiving optical axis or an emission optical axis of the laser light of the acquisition and tracking target, and is, for example, laser light emitted from a laser light source mounted on the acquisition and tracking target.

The image sensor 32 on the optical path A2 can acquire not only an image of the acquisition and tracking target but also images of an area around the acquisition and tracking target by the image forming optical system 31, and thus can easily keep even the acquisition and tracking target moving at a high speed within an imaging range. On the other hand, the response speed is slower than that of the light-receiving position detection element 22, and therefore detection of the acquisition and tracking target moving at a high speed is difficult. The light-receiving position detection element 22 in the laser light transmitting and receiving unit 20 on the optical path A2 has a higher response speed than the image sensor 32, and therefore can detect even an acquisition and tracking target moving at a high speed. On the other hand, a detection range of the light-receiving position detection element 22 is narrower than that of the image sensor 32, and thus the acquisition and tracking target moving at a high speed tends to deviate from an acquisition and tracking range.

In the present embodiment, by detecting the acquisition and tracking target using both the image sensor 32 and the light-receiving position detection element 22, it is possible to achieve high-speed response without narrowing the acquisition and tracking range.

The optical beam transceiver 10 includes the relay optical system 40 on the optical path A2 branched by the optical path branching means 33. Since the optical beam transceiver 10 includes the relay optical system 40 in this manner, a diameter of a light flux connecting the imaging unit 30 to the laser light transmitting and receiving unit 20 can be reduced, so that a diameter of the optical axis adjustment optical element 23 can be reduced, and the optical axis adjustment optical element 23 can be made smaller and lighter. Therefore, it is suitable for achieving high-speed response. On the other hand, for example, in a case where the optical axis adjustment optical element 23 is disposed within the image forming optical system 31, optical components of the optical beam transceiver 10 become larger and heavier. Therefore, the response speed decreases, and it becomes difficult to follow the acquisition and tracking target moving at a high speed.

In the optical beam transceiver 10, the gimbal control unit 50 acquires a signal for controlling the operation of the gimbal 11 that supports the optical beam transceiver 10. Therefore, it is suitable for rapidly controlling a rough attitude of the optical beam transceiver 10 optically oriented toward the acquisition and tracking target. By applying the optical beam transceiver 10 to the optical wireless communication mechanism 1 in this manner, acquisition and tracking can be performed even for an acquisition and tracking target moving at a high speed, and optical wireless communication can be continuously performed.

### [Second Embodiment]

Another embodiment of the present invention will be described below. For convenience of description, in the following embodiments, components having the same contents as those described in the above embodiment are denoted by the same reference numerals, and repeated description thereof will be omitted.

### [Configuration]

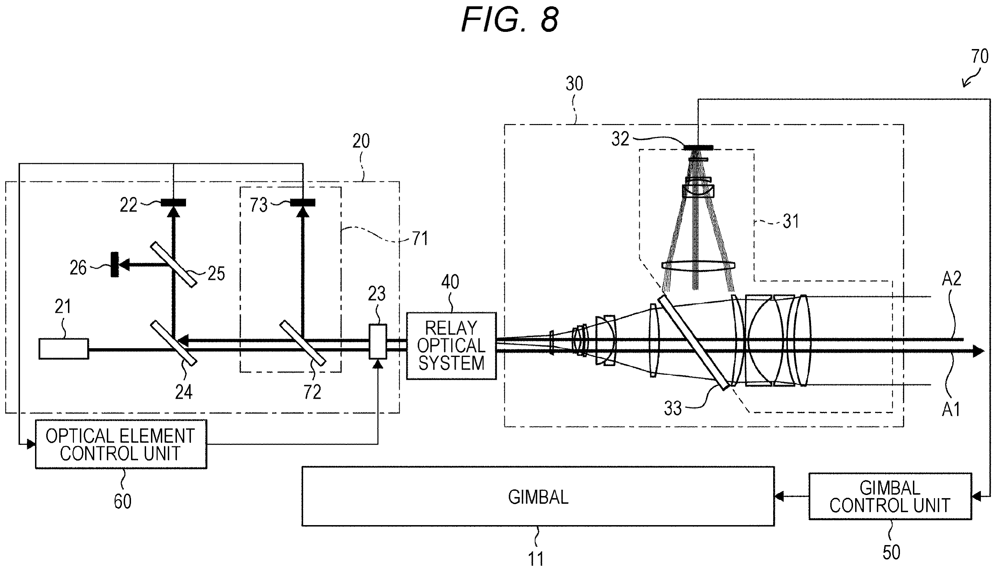

FIG. 8 illustrates an example of an optical system configuration of an optical beam transceiver 70. The optical beam transceiver 70 has the same optical configuration as the above-described optical beam transceiver 10, except that the optical beam transceiver 70 further includes an optical beam imaging optical system 71 that captures an image of an optical beam as viewed in an optical axis direction on the communication-light receiving unit 26 side of the optical axis adjustment optical element 23.

The optical beam imaging optical system 71 includes a half mirror 72 and a communication-light image sensor 73. The half mirror 72 is disposed between the half mirror 24 and the optical axis adjustment optical element 23 on the optical path of the laser light. The half mirror 72 transmits transmitted light from the laser light source 21 and reflects received light from the acquisition and tracking target toward the communication-light image sensor 73 at an angle of 90°.

The communication-light image sensor 73 is an element capable of capturing, as an image, infrared laser light arriving from the acquisition and tracking target. The communication-light image sensor 73 captures an image of the received light in a cross section of the optical path of the received light. For example, the communication-light image sensor 73 is an infrared CCD sensor. The communication-light image sensor 73 is connected to the optical element control unit 60, and the signal of the image information captured by the communication-light image sensor 73 is input to the optical element control unit 60.

### [Specific Mode of Acquisition and Tracking Control]

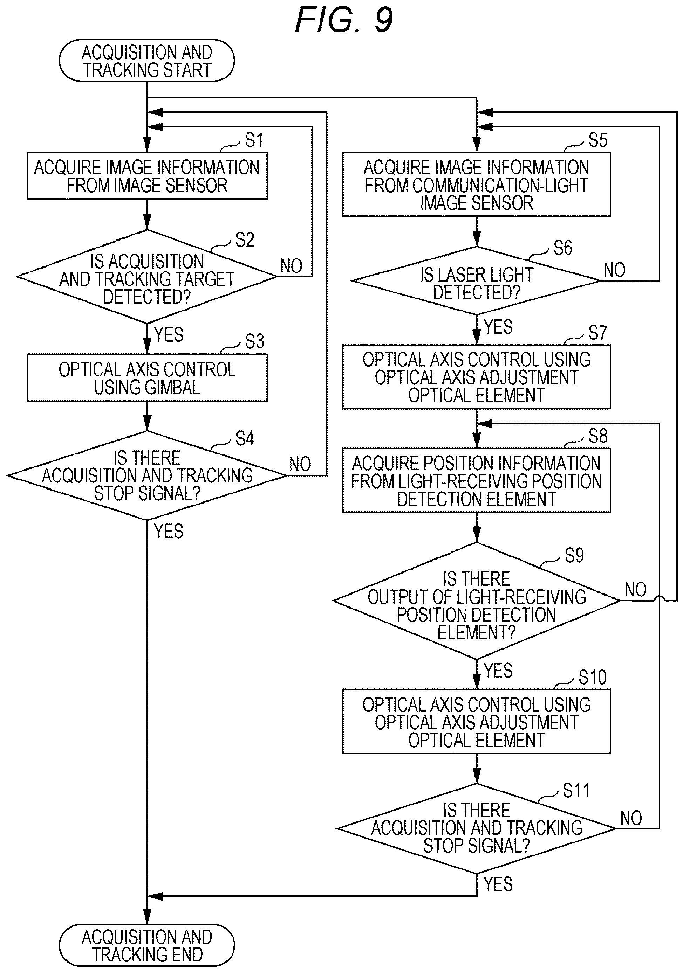

FIG. 9 is a flowchart illustrating a flow of processing of an example of the acquisition and tracking control performed by the optical beam transceiver 70. In FIG. 9, steps S1 to S4 are processing for adjusting an optical axis by gimbal control based on images acquired from the image sensor 32. In FIG. 9, steps S5 to S11 are processing for adjusting the optical axis by the optical axis adjustment optical element 23 based on images acquired from the communication-light image sensor 73 and an output of the light-receiving position detection element 22. After the start of acquisition and tracking, the acquisition and tracking control branches into the processing of step S1 and the processing of step S5 in FIG. 9, and the processing of steps S1 to S4 and the processing of steps S5 to S 11 in FIG. 9 are performed in parallel.

The processing of steps S1 to S4 in FIG. 9 is the same as that described in the above-described first embodiment.

In FIG. 9, step S5 is a step of acquiring an output of the communication-light image sensor 73. In step S5, the optical element control unit 60 acquires image information of the received light in a cross section of an optical path of the received light, which is detected by the communication-light image sensor 73.

In FIG. 9, step S6 is a step of detecting laser light using the image information of the received light. In step S6, the optical element control unit 60 detects, from the image information of the received light, laser light arriving from the acquisition and tracking target on a pixel-by-pixel basis, and specifies the position of the laser light arriving from the acquisition and tracking target. In a case where laser light arriving from the acquisition and tracking target is not detected from the image information from the communication-light image sensor 73, the optical element control unit 60 repeats the above processing from step S5.

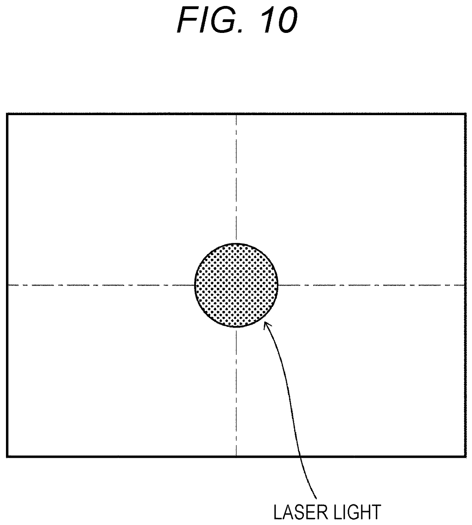

In FIG. 9, step S7 is a step of adjusting an optical axis by using the optical axis adjustment optical element 23 based on the image information from the communication-light image sensor 73. In step S7, for example, the optical element control unit 60 acquires and outputs operation information of the optical axis adjustment optical element 23 for bringing the image of laser light arriving from the acquisition and tracking target to a center of the image captured by the communication-light image sensor 73, and controls an operation of the optical axis adjustment optical element 23. As a result, as illustrated in FIG. 10, the operation of the optical axis adjustment optical element 23 is controlled such that the image of the laser light arriving from the acquisition and tracking target is positioned at the center of the image captured by the communication-light image sensor 73, and an optical axis misalignment amount between an optical axis of laser light emitted from the optical beam transceiver 70 and an optical axis of laser light arriving from the acquisition and tracking target is reduced.

In FIG. 9, steps S8 to S11 are processing for adjusting the optical axis by the optical axis adjustment optical element 23 based on an output of the light-receiving position detection element 22. Steps S8 to S11 are the same as steps S5 to S8 in the above-described first embodiment. Through the control performed in step S10, the optical axis misalignment amount between an optical axis of laser light emitted from the optical beam transceiver 70 and an optical axis of laser light arriving from the acquisition and tracking target is further reduced. In a case where the acquisition and tracking stop signal is not detected in step S11, the optical element control unit 60 repeats the above processing from step S8 to step S11.

### [Operational Effects]

The optical beam transceiver 70 includes the optical beam imaging optical system 71 at a position on a downstream side of the optical axis adjustment optical element 23 with respect to laser light arriving from the acquisition and tracking target, in the laser light transmitting and receiving unit 20.

In the optical beam imaging optical system 71, the communication-light image sensor 73 receives laser light arriving from the acquisition and tracking target and performs imaging.

Based on the image of the laser light arriving from the acquisition and tracking target acquired by the communication-light image sensor 73, the optical axis adjustment optical element is controlled, for example, such that the laser light arriving from the acquisition and tracking target is positioned at the center of the image, and acquisition and tracking are performed by carrying out so-called optical axis alignment such that an optical axis misalignment amount between an optical axis of laser light emitted from the optical beam transceiver 70 and an optical axis of laser light arriving from the acquisition and tracking target is reduced.

Compared with performing optical axis alignment indirectly using an image of the acquisition and tracking target captured by the image forming optical system 31 and the image sensor 32, optical axis alignment can be performed with higher accuracy by directly detecting laser light arriving from the acquisition and tracking target using the communication-light image sensor 73. For example, even when the captured image of the acquisition and tracking target is positioned at the center of the image, the optical axis of the laser light emitted from the optical beam transceiver 70 does not necessarily coincide with the optical axis of the laser light arriving from the acquisition and tracking target.

In addition, since a light flux that has passed through the optical axis adjustment optical element 23 is imaged, even in a case where the optical axis adjustment optical element 23 is displaced from a reference position and an optical axis misalignment occurs between an optical axis of the light flux passing through the imaging unit 30 and a light flux after passing through the optical axis adjustment optical element 23, a relative relationship between an optical axis of a light flux incident on the communication-light image sensor 73 and an optical axis of a light flux incident on the light-receiving position detection element 22 is maintained. Therefore, by performing optical axis alignment using an image acquired by the communication-light image sensor 73, it becomes easier to cause laser light arriving from the acquisition and tracking target to be incident on the light-receiving position detection element 22 than by performing optical axis alignment using an image acquired by the image sensor 32.

### [Third Embodiment]

### [Configuration]

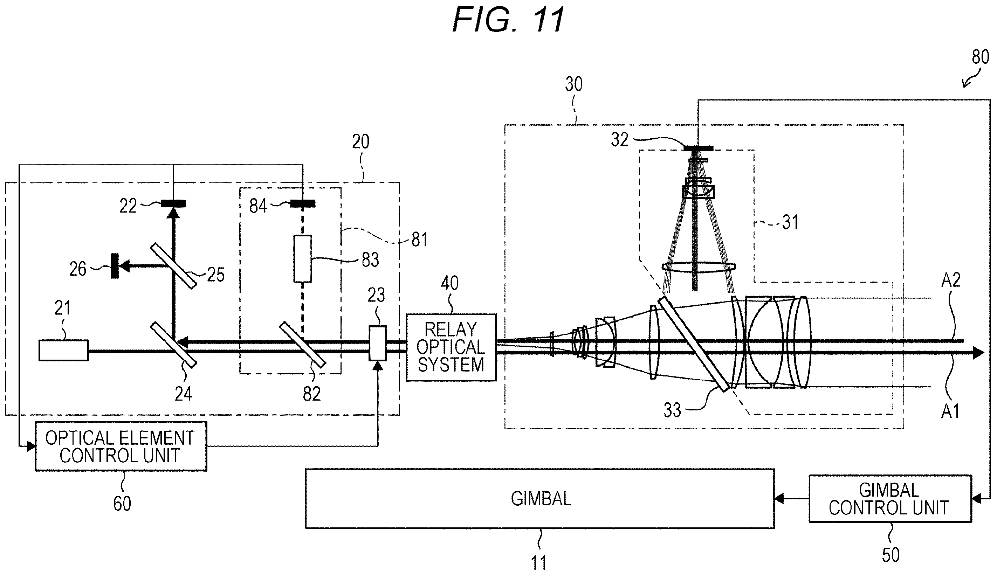

FIG. 11 illustrates an example of an optical system configuration of an optical beam transceiver 80. The optical beam transceiver 80 has the same optical configuration as the above-described optical beam transceiver 10, except that the optical beam transceiver 80 further includes a second image forming optical system 81 that forms an image of the acquisition and tracking target at a position closer to the communication-light receiving unit 26 than the optical axis adjustment optical element 23, as an image larger than the image formed by the image forming optical system 31 and the image sensor 32.

The second image forming optical system 81 includes a half mirror 82, a second image forming optical system 83, and a second image sensor 84. The half mirror 82 is disposed between the half mirror 24 and the optical axis adjustment optical element 23 on the optical path of the laser light. The half mirror 82 transmits transmitted light from the laser light source 21 and reflects received light from the acquisition and tracking target toward the second image forming optical system 83 at an angle of 90°.

The second image forming optical system 83 is an optical system configured to appropriately change a field of view such that an image of the acquisition and tracking target, which is enlarged relative to an image of the acquisition and tracking target formed on the image sensor 32 by the image forming optical system 31 included in the imaging unit 30, is formed on the second image sensor 84. The second image forming optical system 83 may include one or more various lenses arranged in combination.

The second image sensor 84 is an element that captures an image of laser light arriving from the acquisition and tracking target. The second image sensor 84 captures an image of the acquisition and tracking target that is enlarged relative to an image of the acquisition and tracking target obtained by the imaging unit 30. For example, the second image sensor 84 is a CCD sensor. The second image sensor 84 is connected to the optical element control unit 60, and the signal of the image information captured by the second image sensor 84 is input to the optical element control unit 60.

### [Specific Mode of Acquisition and Tracking Control]

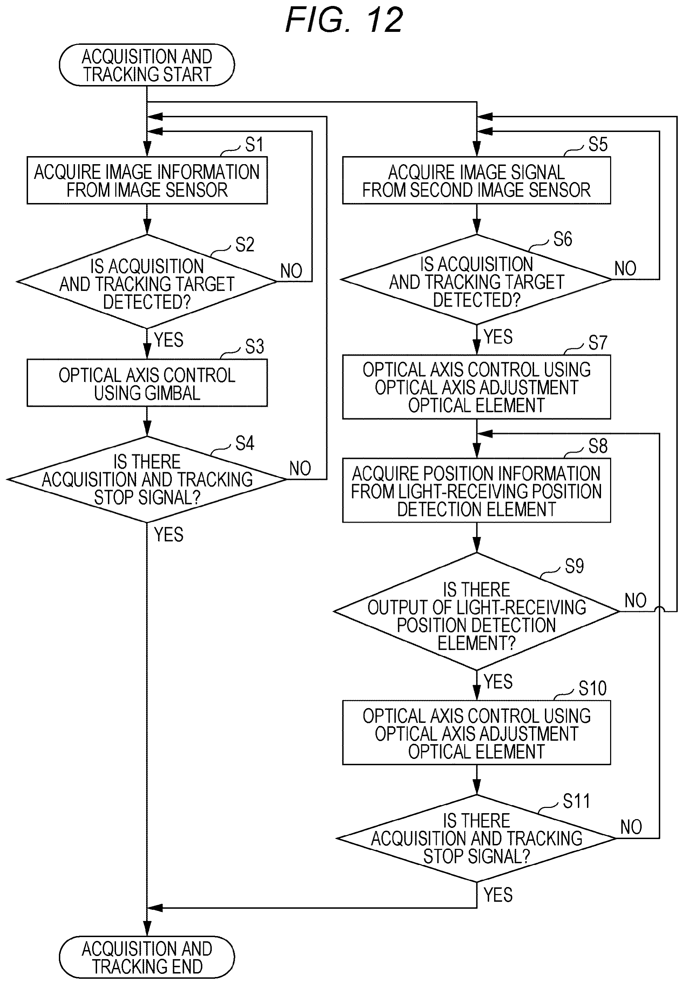

FIG. 12 is a flowchart illustrating a flow of processing of an example of the acquisition and tracking control performed by the optical beam transceiver 80. In FIG. 12, steps S1 to S4 are processing for adjusting an optical axis by gimbal control based on images acquired from the image sensor 32. In FIG. 12, steps S5 to S11 are processing for adjusting the optical axis by the optical axis adjustment optical element 23 based on images acquired from the second image sensor 84 and an output of the light-receiving position detection element 22. After the start of acquisition and tracking, the acquisition and tracking control branches into the processing of step S1 and the processing of step S5 in FIG. 12, and the processing of steps S1 to S4 and the processing of steps S5 to S11 in FIG. 12 are performed in parallel.

The processing of steps S1 to S4 in FIG. 12 is the same as that described in the above-described first embodiment.

In FIG. 12, step S5 is a step of acquiring image information from the second image sensor 84.

In step S5, the optical element control unit 60 acquires information of an image that is captured by the second image sensor 84 and that is enlarged relative to an image of the acquisition and tracking target formed on the image sensor 32 by the image forming optical system 31.

In FIG. 12, step S6 is a step of adjusting an optical axis by using the optical axis adjustment optical element 23 based on the image information from the second image sensor 84. In step S6, the optical element control unit 60 detects the acquisition and tracking target on a pixel-by-pixel basis based on the image information from the second image sensor 84, and specifies a position of the acquisition and tracking target. In a case where information of the acquisition and tracking target is not detected from the image information from the second image sensor 84, the optical element control unit 60 repeats the processing from step S5 to step S6.

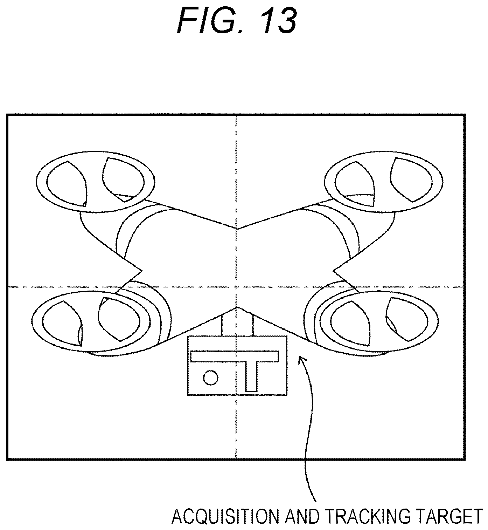

In FIG. 12, step S7 is a step of adjusting an optical axis by using the optical axis adjustment optical element 23 based on the image information from the second image sensor 84. In step S7, for example, the optical element control unit 60 acquires and outputs operation information of the optical axis adjustment optical element 23 for bringing the image of the acquisition and tracking target to a center of the image captured by the second image sensor 84, and controls an operation of the optical axis adjustment optical element 23. As a result, as illustrated in FIG. 13, the operation of the optical axis adjustment optical element 23 is controlled such that the acquisition and tracking target is positioned at the center of the image captured by the second image sensor 84, and an optical axis misalignment amount between an optical axis of laser light emitted from the optical beam transceiver 80 and an optical axis of laser light arriving from the acquisition and tracking target is reduced.

In FIG. 12, steps S8 to S11 are processing for adjusting the optical axis by the optical axis adjustment optical element 23 based on an output of the light-receiving position detection element 22. Steps S8 to S11 are the same as steps S5 to S8 in the above-described first embodiment. Through the control performed in step S10, the optical axis misalignment amount between an optical axis of laser light emitted from the optical beam transceiver 80 and an optical axis of laser light arriving from the acquisition and tracking target is further reduced. In a case where the acquisition and tracking stop signal is not detected in step S11, the optical element control unit 60 repeats the above processing from step S8 to step S11.

### [Operational Effects]

The optical beam transceiver 80 includes the second image forming optical system 81 at a position on a downstream side of the optical axis adjustment optical element 23 with respect to laser light arriving from the acquisition and tracking target. The second image forming optical system 81 forms, on the second image sensor 84, an image of the acquisition and tracking target that is larger than an image of the acquisition and tracking target formed on the image sensor 32 in the imaging unit 30 by the image forming optical system 31 in the imaging unit 30.

An image of the acquisition and tracking target acquired by the second image sensor 84 is an image in which the acquisition and tracking target is enlarged relative to an image of the acquisition and tracking target obtained by the imaging unit. Therefore, compared with an image acquired by the image sensor 32 in the imaging unit 30, the number of pixels corresponding to the acquisition and tracking target increases, and the accuracy of the position detection is further improved.

In a case where the acquisition and tracking target is located at a long distance, the acquisition and tracking target appears small in a captured image. In such a case, alignment control using enlarged imaging according to the present embodiment is effective. In addition, even in a case where an optical system having a variable magnification, such as a zoom lens, is provided in order to capture a distant acquisition and tracking target in an enlarged manner, a magnification change operation requires time, and therefore it may be difficult to apply such a system to an acquisition and tracking target moving at a high speed. However, in the present embodiment, a wide-area image and an enlarged image can be captured simultaneously. Therefore, the present embodiment is effective even for an acquisition and tracking target moving at a high speed.

In addition, since an enlarged image of the acquisition and tracking target is captured using a light flux that has passed through the optical axis adjustment optical element 23, even in a case where the optical axis adjustment optical element 23 is displaced from the reference position due to an operation for adjusting the optical axis and an optical axis misalignment occurs between an optical axis of a light flux passing through the imaging unit 30 and a light flux after passing through the optical axis adjustment optical element 23, a relative relationship between an optical axis of the second image forming optical system 81 and an optical axis of a light flux incident on the light-receiving position detection element 22 is maintained. Therefore, by performing optical axis alignment using an image acquired by the second image sensor 84, it becomes easier to cause laser light arriving from the acquisition and tracking target to be incident on the light-receiving position detection element 22 than by performing optical axis alignment using an image acquired by the image sensor 32 in the imaging unit 30.

### [Fourth Embodiment]

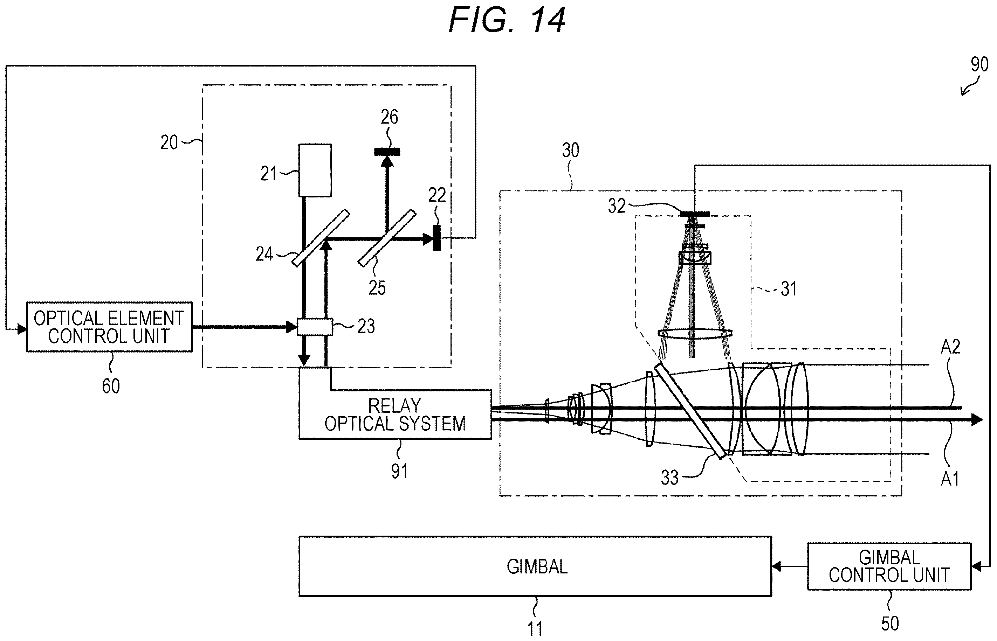

FIG. 14 illustrates an example of an optical system configuration of an optical beam transceiver 90. The optical beam transceiver 90 has the same optical configuration as the above-described optical beam transceiver 10, except that a relative position between the laser light transmitting and receiving unit 20 and the imaging unit 30 on the gimbal 11 is different and a configuration of a relay optical system that optically connects them is different.

In the optical beam transceiver 90, the laser light transmitting and receiving unit 20 and the imaging unit 30 are optically connected by a relay optical system 91. The relay optical system 91 forms an L-shaped optical path. Therefore, in the optical beam transceiver 90, the laser light transmitting and receiving unit 20 is disposed closer to a center of the gimbal 11 than in the optical beam transceiver 10.

Thus, in the optical beam transceiver 90, by using the relay optical system 91 that forms an optical path having an appropriate shape, the laser light transmitting and receiving unit 20 can be arranged at an arbitrary position. Accordingly, the laser light transmitting and receiving unit 20 can be positioned in consideration of a weight balance between the imaging unit 30 and the laser light transmitting and receiving unit 20 on the gimbal 11. In the present embodiment, the degree of freedom in arrangement of the optical configuration of the optical beam transceiver 90 is further increased, and mounting on the gimbal 11 is made easier. In this manner, the present embodiment is advantageous from the viewpoint of appropriately adjusting a weight balance on the gimbal 11.

### [Other embodiments]

Although the above-described embodiments have been described using optical wireless communication as an example, the present invention is also applicable to optical wireless power transfer in the same manner as optical wireless communication.

In the above-described embodiments, the laser light generated by the laser light source 21 may be the above-described infrared laser light as needed, or may be laser light having a wavelength in another range (for example, an ultraviolet region or a visible light region). In addition, the optical beam to be transmitted and received may be LED light instead of laser light.

The optical axis adjustment optical element according to the present invention may be other than the wedge prisms in the above-described embodiments, as long as it is within a range in which fine adjustment of the optical axis can be achieved, and may be, for example, a fast steering mirror (also referred to as a "Fine Pointing Mirror" in the field of communications). For example, the fast steering mirror may be supported so as to be drivable by two or more actuators driven by, for example, voice coil motors, and configured such that an orientation of a mirror surface can be freely changed. Such a fast steering mirror functions as a two-dimensionally driven mirror capable of changing an orientation of a mirror surface on which an optical beam to be transmitted and received is incident, and is capable of precisely and rapidly adjusting an emission angle of the incident optical beam to a specific emission angle.

In the present invention, acquisition and tracking control may be performed by parallel processing of the gimbal control and the optical axis adjustment as described above, or may be performed in series, for example, by performing the gimbal control followed by the optical axis adjustment. Such serial processing may be implemented, for example, in the first embodiment by executing the steps from step S5 onward after step S4. The parallel processing described in the above embodiments is preferable from the viewpoint of increasing the speed of acquisition and tracking control, whereas the serial processing is preferable from the viewpoint of reducing a processing load of the acquisition and tracking control.

In the present invention, the attitude of the optical beam transceiver for acquisition and tracking may be controlled by motion of a mobile body itself. For example, in a case where the optical beam transceiver is mounted on a flying object such as a drone, acquisition and tracking of an acquisition and tracking target can also be realized by controlling an attitude of the flying object. In this case, the optical beam transceiver may include, for example, a mobile-body attitude control unit instead of a gimbal control unit, and an output signal from the mobile-body attitude control unit may be input to a drive control unit of the mobile body.

In addition, in the above-described second and third embodiments, gimbal control may be performed based on image information (image information of received light or image information of an enlarged acquisition and tracking target) acquired from the communication-light image sensor or the second image sensor, or the image information may be used for both gimbal control and optical axis adjustment.

### [Summary]

A first aspect of the present invention is an optical beam source acquisition device that acquires an optical beam source that generates an optical beam, the optical beam source acquisition device including: an optical axis adjustment optical element (23) that adjusts an optical axis of a passing optical beam; a light-receiving unit (communication-light receiving unit 26) that receives an optical beam having passed through the optical axis adjustment optical element; an optical axis position detection optical system (light-receiving position detection element 22) that detects a position of an optical axis of the optical beam on a light-receiving unit side of the optical axis adjustment optical element; an imaging optical system (image forming optical system 31) that captures an image of the optical beam source on an optical beam source side of the optical axis adjustment optical element; a first control unit (gimbal control unit 50) that outputs a signal for controlling an attitude of the optical beam source acquisition device based on the image captured by the imaging optical system; and a second control unit (optical element control unit 60) that outputs, to the optical axis adjustment optical element, a signal for controlling adjustment of an optical axis by the optical axis adjustment optical element based on the position of the optical axis detected by the optical axis position detection optical system. According to the first aspect, it is possible to achieve a high-speed response without narrowing an acquisition and tracking range, and to realize optical axis alignment of an optical beam from an acquisition target at a high speed and with high accuracy in optical wireless communication and optical wireless power transfer.

A second aspect of the present invention, according to the first aspect, further includes an optical beam imaging optical system (71) that captures an image of the optical beam, as viewed in an optical axis direction, on the light-receiving unit side of the optical axis adjustment optical element, in which one or both of the first control unit and the second control unit output the signal based on the image captured by the optical beam imaging optical system. According to the second aspect, since a relative relationship between an optical axis of a light flux incident on the optical beam imaging optical system and an optical axis of a light flux incident on the light-receiving unit is maintained, it is more effective from a viewpoint of facilitating incidence of laser light arriving from an acquisition and tracking target onto the optical axis position detection optical system.

A third aspect of the present invention, according to the first aspect, further includes an image forming optical system (second image forming optical system 81) that forms an image of the optical beam source as an image larger than the image captured by the imaging optical system, on the light-receiving unit side of the optical axis adjustment optical element, in which one or both of the first control unit and the second control unit output the signal based on the image formed on the image forming optical system. According to the third aspect, since a relative relationship between an optical axis of a light flux incident on the image forming optical system and an optical axis of a light flux incident on the light-receiving unit is maintained, it is more effective from a viewpoint of facilitating incidence of laser light arriving from an acquisition and tracking target onto the optical axis position detection optical system.

In a fourth aspect of the present invention, according to any one of the first to third aspects, the optical beam source acquisition device further includes a relay optical system (40, 91) between the imaging optical system and the optical axis adjustment optical element. According to the fourth aspect, it is more effective from a viewpoint of achieving a high-speed response through reduction in size and weight of the optical axis adjustment optical element, and from a viewpoint of appropriately adjusting a weight balance of the optical beam source acquisition device on the gimbal.

In a fifth aspect of the present invention, according to any one of the first to fourth aspects, the first control unit controls an operation of a gimbal that supports the optical beam source acquisition device. According to the fifth aspect, it is more effective from a viewpoint of rapidly and appropriately controlling an attitude of an optical beam source acquisition device or an optical beam transceiver that is optically oriented toward an acquisition and tracking target.

A sixth aspect of the present invention is an optical beam transceiver (10) including the optical beam source acquisition device according to any one of the first to fifth aspects; and an optical beam generation device that generates an optical beam passing through the optical axis adjustment optical element, on the light-receiving unit side of the optical axis adjustment optical element. According to the sixth aspect, it is possible to achieve optical axis alignment of an optical beam from an acquisition and tracking target at higher speed and with higher accuracy than in an optical beam transceiver in the related art which performs optical axis alignment of communication light based only on an image of the acquisition and tracking target.

According to the present invention, it is possible to improve accuracy of optical axis alignment without narrowing an acquisition and tracking range, and also to enable acquisition and tracking of an acquisition and tracking target moving at a high speed by increasing a speed of detection of the acquisition and tracking target using an optical sensor. The present invention, which provides such effects, is expected to contribute, for example, to achievement of the Sustainable Development Goals (SDGs) advocated by the United Nations, such as Goal 9, "Build resilient infrastructure, promote inclusive and sustainable industrialization and foster innovation".

The present invention is not limited to the above-described embodiments, and thus various modifications can be made within the scope of the claims. Embodiments obtained by combining as appropriate technical means disclosed in relation to different embodiments are also included in the technical scope of the present invention.

## Claims

1. An optical beam source acquisition device that acquires an optical beam source that generates an optical beam, the optical beam source acquisition device comprising:
an optical axis adjustment optical element (23) that adjusts an optical axis of a passing optical beam;
a light-receiving unit (26) that receives an optical beam having passed through the optical axis adjustment optical element (23);
an optical axis position detection optical system (22) that detects a position of an optical axis of the optical beam on a light-receiving unit (26) side of the optical axis adjustment optical element (23);
an imaging optical system (31) that captures an image of the optical beam source on an optical beam source side of the optical axis adjustment optical element (23);
a first control unit (50) that outputs a signal for controlling an attitude of the optical beam source acquisition device based on the image captured by the imaging optical system (31); and
a second control unit (60) that outputs, to the optical axis adjustment optical element (23), a signal for controlling adjustment of an optical axis by the optical axis adjustment optical element (23) based on the position of the optical axis detected by the optical axis position detection optical system (22).

2. The optical beam source acquisition device according to claim 1, further comprising:
an optical beam imaging optical system (71) that captures an image of the optical beam, as viewed in an optical axis direction, on the light-receiving unit (26) side of the optical axis adjustment optical element (23),
wherein one or both of the first control unit (50) and the second control unit (60) output the signal based on the image captured by the optical beam imaging optical system (71).

3. The optical beam source acquisition device according to claim 1, further comprising:
an image forming optical system (81) that forms an image of the optical beam source as an image larger than the image captured by the imaging optical system (31), on the light-receiving unit (26) side of the optical axis adjustment optical element (23),
wherein one or both of the first control unit (50) and the second control unit (60) output the signal based on the image formed on the image forming optical system (81).

4. The optical beam source acquisition device according to claim 1, further comprising:
a relay optical system (40, 91) provided between the imaging optical system (31) and the optical axis adjustment optical element (23).

5. The optical beam source acquisition device according to claim 1,
wherein the first control unit (50) controls an operation of a gimbal (11) that supports the optical beam source acquisition device.

6. An optical beam transceiver comprising:
the optical beam source acquisition device according to any one of claims 1 to 5; and
an optical beam generation device that generates an optical beam passing through the optical axis adjustment optical element (23), on the light-receiving unit (26) side of the optical axis adjustment optical element (23).
